# EUROPÄISCHE PATENTSCHRIFT

(11) **EP 2 801 532 B1**
(45) Veröffentlichungstag und Bekanntmachung des Hinweises auf die Patenterteilung: **28.09.2016**
(21) Anmeldenummer: 14164251.2
(22) Anmeldetag: 10.04.2014
(51) Int. Cl.: B65B 35/04, B29C 45/17, B29C 45/42, B65B 35/38, B65B 5/08

(54) **Verpackungsverfahren, Verpackungsvorrichtung sowie Spritzgussanlage mit Verpackungsvorrichtung**
Packaging method, packaging device and injection moulding machine with packaging device
Procédé d'emballage, dispositif d'emballage et installation de moulage par injection équipée de dispositif d'emballage

(30) Priorität: 08.05.2013 DE 102013104804
(43) Veröffentlichungstag der Anmeldung: 12.11.2014
(73) Patentinhaber: Waldorf Technik GmbH & Co. KG, 78234 Engen (DE)
(72) Erfinder: Czizegg, Wolfgang, 78256 Steisslingen (DE); Boos, Christian, 79194 Gundelfingen (DE)
(74) Vertreter: Wagner, Kilian

(56) Entgegenhaltungen:
- EP-A1- 2 295 353
- WO-A1-99/55514
- WO-A1-2004/054778
- WO-A1-2005/037520
- WO-A1-2007/058521
- WO-A1-2011/003507
- DE-A1- 19 804 830
- US-A- 4 814 134
- US-A- 5 829 222

## Beschreibung

Die Erfindung betrifft ein Verpackungsverfahren zum Verpacken von als Pipettenspitzen oder medizinische Reaktionsgefäße ausgebildeten Spritzgussteilen gemäß dem Oberbegriff des Anspruchs 1 sowie eine Verpackungsvorrichtung gemäß dem Oberbegriff des Anspruchs 10 zum Verpacken von als Pipettenspitzen oder medizinische Reaktionsgefäße ausgebildeten Kunststoffspritzgussteilen. Ferner betrifft die Erfindung eine Spritzgussanlage mit einer derartigen Verpackungsvorrichtung, wobei die Spritzgussanlage zur Herstellung von als Pipettenspitzen oder medizinische Reaktionsgefäße ausgebildeten Kunststoffspritzgussteilen ausgebildet ist.

Bei bekannten Verpackungsverfahren zum Verpacken von als Pipettenspitzen oder medizinische Reaktionsgefäße, insbesondere zur Blutanalyse, ausgebildeten Kunststoffspritzgussteilen werden gleichzeitig K Kunststoffspritzgussteile aus K Kavitäten einer Spritzgussvorrichtung entnommen und als Schüttgut zwischengespeichert. Aus diesem Zwischenspeicher werden dann Endverpackungseinheiten jeweils mit A Kunststoffspritzgussteilen beladen. Nachteilig bei dem bekannten Verfahren ist, dass keine Zuordnung der abgepackten Kunststoffspritzgusstelle zu bestimmtem Kavitäten möglich ist. Es ist also nicht mehr nachvollziehbar, aus welcher Kavität bzw. aus welchen Kavitäten die Kunststoffspritzgussteile einer bestimmten Endverpackungseinhett stammen. Dies führt bei nur einem einzigen fehlerhaften Kunststoffspritzgussteile in einer Endverpackungseinheit dazu, dass die gesamte Produktion zurückgerufen werden muss und nicht nur die mit Kunststoffspritzgussteilen aus einer bestimmten Kavität bzw. aus bestimmten Kavitäten bestückten Endverpackungseinheiten.

Ein bezüglich des vorstehend geschilderten Problems verbessertes Verpackungsverfahren sieht vor, die als Pipettenspitzen oder medizinische Reaktionsgefäße ausgebildeten Kunststoffspritzgussteile ohne Ablage in einem Zwischenspeicher unmittelbar, d.h. ohne Zwischenspeicherung aus den Kavitäten in die Endverpackungseinheiten zu überführen. Hierzu werden die Kunststoffspritzgussteile über Schläuche zu den Endverpackungseinheiten gefördert. Nachteilig hierbei ist, dass die Anzahl A von in einer Endverpackungseinheit zu befördernden Kunststoffspritzgussteilen der Anzahl K. Kavitäten entsprechen muss oder dass die Anzahl A von in einer Endverpackungseinheit zu überführenden Kunststoffspritzgussteile ein ganzteiliges Vielfaches von K Kavitäten sein muss. Insbesondere nachteilig bei einer derartigen Anlage ist der enorme Raumbedarf für das Schlauchpakte und die vergleichsweise langsame Zykluszeit.

Ein hinsichtlich des vorstehenden Problems verbessertes Verpackungsverfahren sowie eine zugehörige Verpackungsvorrichtung hat die Anmelderin in der WO 2011/003507 A1 und der daraus resultierenden EP 2 323 930 B1 beschrieben. Das verbesserte Verfahren sieht vor, dass die gleichzeitig aus den K Kavitäten entnommenen K Kunststoffspritzgussteile unmittelbar nach der Entnahme gleichzeitig auf U Untergruppen verteilt in einem Zwischenspeicher abgelegt werden und dass mehrfach und solange K Kunststoffspritzgussteile aus den K Kavitäten entnommen und gleichzeitig auf die U Untergruppen in dem Zwischenspeicher verteilt werden, bis jede Untergruppe L Kunststoffspritzgussteile aufweist, wobei die Anzahl L der Kunststoffspritzgussteile einer Untergruppe der Anzahl A von in einer Endverpackungseinheit maximal zu ladenden Kunststoffspritzgussteilen oder einem ganzzahligen Teiler von A entspricht. Dieses Verfahren hat sich bewährt; es bestehen jedoch Bestrebungen, die Zykluszeiten des Verpackungsverfahrens zum Verpacken von als Pipettenspitzen oder medizinische Reaktionsgefäße ausgebildeten Kunststoffspritzgussteilen zu verkürzen.

Die WO 2004/054778 A1 beschreibt eine Vorrichtung zum Verpacken von Spritzgussteilen in Endverpackungen, wobei die Kunststoffspritzgussteile in einer horizontalen Ablageebene durch einen Roboterarm mit entsprechenden Greifwerkzeugen abgelegt werden, und zum Umgreifen einen Zwischenpuffer aufweist.

Aus der DE 198 04 830 A1 ist eine Vorrichtung und ein Verfahren zum Herstellen von Bürsten bekannt, wobei im Rahmen der Bürstenherstellung ein Zwischenpuffer eingesetzt wird, in dem Bürstengriffe zwischengepuffert werden, bevor diesen dann in einem nächsten Bearbeitungsschritt ein Bürstenkörper zugeordnet bzw. an diesen montiert wird.

Aus der WO 2004/054778 A1 ist ein Handlingapparatus für Spritz-gussteüe bekannt, die an einer Abkühlstation vor der weiteren Verar-beitung zwischengelagert werden, wobei Spritzgussteile an der Kühlstation mit einem Kühlfluid, insbesondere Druckluft beauf-schlagt werden.

Zum weiteren Stand der Technik werden die EP 2 295 353 A1, die WO 99/55514 A1 sowie die US 4,814,134 A genannt.

Ausgehend von dem vorgenannten Stand der Technik liegt der Erfindung die Aufgabe zugrunde, ein hinsichtlich der Zykluszeit weiter optimiertes Verpackungsverfahren zum Verpacken von als Pipettenspitzen oder medizinische Reaktionsgefäße ausgebildeten Kunststoffspritzgussteilen sowie eine entsprechend verbesserte Verpackungsvorrichtung und eine Spritzgussanlage mit einer solchen Verpackungsvorrichtung anzugeben, wobei das Verfahren bevorzugt gewährleisten soll, dass nachvollziehbar ist, aus welcher Kavität bzw. aus welchen Kavitäten die Kunststoffspritzgussteile einer Endverpackungseinheit entstammen und bei denen die Anzahl A der maximal in einer Endverpackungseinhert zu beladenen Kunststoffspritzgussteile unabhängig wählbar ist von der fixen Anzahl K Kavitäten eines Spritzgusswerkzeugs. Darüber hinaus soll der Aufbau der Vorrichtung möglichst einfach und robust sein und ferner soll das Risiko von Beschädigungen der Kunststoffspritzgussteile minimiert werden.

Diese Aufgabe wird hinsichtlich des Verpackungsverfahrens mit den Merkmalen des Anspruchs 1, hinsichtlich der Verpackungsvorrichtung mit den Merkmalen des Anspruchs 10 und hinsichtlich der Spritzgussanlage mit den Merkmalen des Anspruchs 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen verfahrensgemäß offenbarte Merkmale als vorrichtungsgemäß offenbart gelten und beanspruchbar sein. Ebenso sollen vorrichtungsgemäß offenbarte Merkmale als verfahrensgemäß offenbart gelten und beanspruchbar sein.

Der Erfindung liegt der Gedanke zugrunde, die aus den K Kavitäten gleichzeitig entnommenen K Kunststoffspritzgussteile vor dem Ablegen in einem (fakultativen, d.h. nicht zwingend jedoch bevorzugt vorgesehenen) Zwischenspeicher und/oder in den Endverpackungen in einem Zwischenpuffer abzulegen und zwar mit Ablagemitteln, die von den Ablagemitteln, mit denen die K Kunststoffspritzgussteile in den Zwischenspeicher oder der mindestens einen Endverpackung zu Untergruppen gruppiert werden separat, d.h. zusätzlich vorgesehen ist. Anders ausgedrückt wird also mindestens eine zusätzliche, insbesondere horizontale Ablageebene in Form eines Zwischenspeichers vorgesehen, in welchem die K Kunststoffspritzgussteile, vorzugsweise ausschließlich K Kunststoffspritzgussteile vor dem Zuordnen zu Untergruppen in einem Zwischenspeicher und/oder in mindestens einer Endverpackung, vorzugsweise in mehreren Endverpackungen, zwischengepuffert, d.h. kurzzeitig abgelegt werden. Überraschend resultiert aus dieser Maßnahme ein Geschwindigkeitsvorteil, d.h. die Zykluszeit kann gegenüber bekannten Verfahren und Vorrichtungen ohne einen solchen Zwischenpuffer weiter reduziert werden. Dies liegt in erster Linie darin, dass ggf. notwendige Rasterhübe auf mehrere Ablagemittel bzw. Greifer verteilt werden können. Hierdurch können die zweiten Ablagemittel eine deutlich geringere Funktionalität aufweisen und können daher mit geringerer Masse realisiert werden, was im Ergebnis dann überraschend trotz eines zusätzlichen Zwischenablageschrittes im Zwischenpuffer den gewünschten Geschwindigkeitsvorteil mit sich bringt. Die zweiten Ablagemittel, mit denen die K Kunsfistoffspritzgussteile in dem Zwischenspeicher abgelegt werden können im einfachsten Fall von Entnahmemitteln gebildet werden, mit denen die K Kunststoffspritzgussteile aus den K Kavitäten entnommen werden. Bevorzugt ist es jedoch zur weiteren Geschwindigkeitsoptimierung, wenn es sich bei den zweiten Ablagemitteln um von den Entnahmemitteln separate, d.h. zusätzlich vorgesehene Handhabungsmittel handelt.

Grundsätzlich ist es möglich, als zweite Ablagemittel zur Ablage eines Schusses von K Kunststoffspritzgussteilen in dem Zwischenpuffer ein Schlauchpaket vorzusehen, in welches die K Kunststoffspritzgussteile nach oder während der Entnahme aus den K Kavitäten überführt und mit Druckluft innerhalb dieser Schläuche zu dem Zwischenpuffer gefördert werden. Zur Minimierung einer Beschädigungsgefahr der Kunststoffspritzgussteile und zur Optimierung des Bauraums ist es jedoch vorteilhaft, wenn die zweiten Ablagemittel einen Greifer umfassen, wobei allgemein unter einem Greifer im Rahmen der vorliegenden Anmeldung Vakuumgreifer und/oder mechanische Greifer verstanden werden, d.h. eine Handhabungseinrichtung, die die K Kunststoffspritzgussteile an einer Empfangsposition übernimmt, und sich dann zu einer Ablageposition bewegt, insbesondere verschwenkt oder translatorisch verfährt und an der Ablageposition ablädt.

Erfindungsgemäß ist zusätzlich zu dem Zwischenpuffer ein Zwischenspeicher vorgesehen, der die anspruchsgemäße, insbesondere horizontale Ablageebene bildet, wobei die K Kunststoffspritzgussteile von ersten Ablagemitteln, die einen Greifer umfassen, in dem Zwischenspeicher gruppiert werden. Aus dem Zwischenspeicher kann gleichzeitig eine einzige Endverpackungseinheit (und nacheinander mehrere Endverpackungseinheiten) oder alternativ gleichzeitig mehrere Endverpackungseinheiten beladen werden. Jedenfalls ist die Anzahl der in einer Endverpackungseinheit maximal aufnehmbaren Kunststoffspritzgussteile gleich wie oder bevorzugt geringer als die im Zwischenspeicher maximal aufnehmbaren Teile, wobei die Anzahl A der in einer Endverpackungseinheit maximal aufnehmbaren Kunststoffspritzgussteile bevorzugt einem ganzzahligen Teiler der im Zwischenspeicher maximal vorgesehenen Teilezahl entspricht. Die Endverpackungseinheiten werden indirekt über den Zwischenspeicher bevorzugt lückenlos beladen.

Wesentlich ist es, dass es sich bei den im Rahmen des Verfahrens bzw. der Vorrichtung zur Anwendung kommenden Verpackungseinheiten, die aus dem Zwischenspeicher beladen werden um Endverpackungseinheiten handelt, die nach der vollständigen Befüllung zu Endkunden ausgeliefert werden, wobei es sich beim Auslieferungsschritt an den Endkunden bzw. die Übergabe an eine Spedition oder dergleichen Transporteinheit um einen weiterbildungsgemäßen Verfahrensschritt handelt, der hiermit als beanspruchbar offenbart gelten soll. Bevorzugt sind die Endverpackungseinheiten dabei so dimensioniert, dass sie entweder 32, 48, 60, 84, 96, 105 oder 120 Kunststoffspritzgussteile beinhalten. Bevorzugt werden die Endverpackungseinheiten zu den Endkunden in Umverpackungen geliefert, wobei entweder die Endverpackungen einzeln, d.h. jeweils mit einer Umverpackung versehen werden oder alternativ mehrere Endverpackungen gruppiert und gemeinsam mit einer Umverpackung, beispielsweise einem Umkarton oder einer Folienverpackung versehen werden. Bei den zum Einsatz kommenden Endverpackungseinheiten handelt es sich ausdrücklich nicht um Werkstückträger zur Zwischenlagerung, aus denen heraus dann in einem zeitlich später gelagerten Schritt, insbesondere nach einer Lagerzeit in einem Zwischenlager, Endverpackungseinheiten verpackt werden. Auch handelt es sich nicht um innerhalb der Verpackungsvorrichtung rotierende bzw. in dieser verbleibende Zwischenspeicher, wie die in der EP 2 323 930 B1 beschriebenen Zwischenspeicher, aus welchen dann erst die Endverpackungseinheiten befüllt werden.

Wesentlich ist also, dass die Endverpackungseinheit nicht dauerhaft in der Verpackungsvorrichtung verbleiben und darin beispielsweise rotieren, sondern dem Verpackungsprozess mittels geeigneter Zuführmittel zugeführt werden und nach dem Beladen aus der Verpackungsvorrichtung mittels geeigneter Ausschleusmittel ausgeschleust werden.

Bevorzugt besteht jede Endverpackungseinheit aus einem mehrere Öffnungen zur jeweiligen Aufnahme eines Kunststoffspritzgussteils aufweisenden Träger, beispielsweise aus Kunststoff oder Metall. Ganz besonders bevorzugt handelt es sich um metallische Träger, beispielsweise aus Aluminium, die hochpräzise gefertigt sind und die nach deren bestimmungsgemäßer Verwendung beim Endkunden, in einem Analysegerät, leer zum Verpackungsprozess zurückgelangen und wieder befüllt werden können. Zusätzlich oder alternativ zu den jeweils A Öffnungen bzw. Vertiefungen können die Endverpackungseinheiten A Aufsteckelemente zum Aufstecken der Kunststoffspritzgussteile aufweisen.

Alternativ handelt es sich bei den Endverpackungseinheiten um Wegwerfträger (Einwegträger), z.B. aus Kunststoff. Unabhängig von der Materialwahl des Trägers sind diese besonders bevorzugt ausgebildet und bestimmt, um in einem Analysegerät, insbesondere in einem Blutanalysegerät eingesetzt zu werden. Bevorzugt sind die Träger (Endverpackungseinheiten) so auf bekannte Analysegeräte abgestimmt, dass diese in diese eingesetzt werden können, so dass die Analysegeräte, bevorzugt automatisch, Pipettenspitzen oder medizinische Reaktionsgefäße aus dem Träger entnehmen können.

Idealerweise wird das nach dem Konzept der Erfindung ausgebildete Verfahren angewendet, wenn die Anzahl der pro Endverpackungseinheit vorzusehenden A Kunststoffspritzgussteile nicht der Anzahl der Kavitäten oder nicht einem ganzzahligen Vielfachen der Anzahl der Kavitäten entspricht.

Der Zwischenpuffer ist erfindungsgemäß so ausgelegt, dass dieser gleichzeitig nicht mehr als einen Schuss von K Kunststoffspritzgussteilen aufnehmen kann und/oder das Verfahren ist so ausgebildet, dass sich gleichzeitig in dem Zwischenpuffer immer nur ein Schuss von K Kavitäten befindet.

Weiterbildungsgemäß ist vorgesehen, dass aus dem Zwischenpuffer vor dem erneuten Befüllen mit K Kunststoffspritzgussteilen K Kunststoffspritzgussteile entnommen und (entweder im Zwischenpuffer oder alternativ unmittelbar in den Endverpackungseinheiten oder der einzigen Endverpackungseinheit) auf die U Untergruppen verteilt werden.

Im Hinblick auf die Anzahl der gleichzeitig zu befüllenden Endverpackungseinheiten gibt es unterschiedliche Möglichkeiten. So ist es grundsätzlich möglich, dass gleichzeitig nur eine einzige Endverpackungseinheit befüllt wird, oder dass gleichzeitig mehrere Endverpackungseinheiten befüllt werden. Das Befüllen erfolgt indem die Untergruppen aus einem vorgesehenen Zwischenspeicher in die Endverpackungseinheit überführt werden, bis die mindestens eine Endverpackungseinheit A Kunststoffspritzgussteile enthält, wobei für den Fall, dass ein Zwischenspeicher vorgesehen wird bevorzugt die Anzahl A der Kunststoffsprifizgussteile maximal der Gesamtanzahl von in dem Zwischenspeicher aufgenommenen Kunststoffspritzgussteilen entspricht. Bevorzugt ist es jedoch, wenn die Anzahl A der maximal in eine Endverpackungseinheit aufzunehmenden Kunststoffspritzgussteile geringer ist als Anzahl der maximal in dem Zwischenspeicher aufnehmbaren Kunststoffspritzgussteile, um aus einem Zwischenspeicher (gleichzeitig oder nacheinander) mehrere Endverpackungseinheiten auffüllen zu können, und zwar entweder einzeln nacheinander oder in Gruppen nacheinander oder alternativ alle gleichzeitig. Ganz besonders bevorzugt ist es, wenn die Anzahl A der maximal in einer Endverpackungseinheit vorsehbaren Kunststoffspritzgussteile einem ganzzahligen Teiler der maximal in dem Zwischenspeicher aufnehmbaren Anzahl von Kunststoffspritzgussteilen entspricht.

Um die Zykluszeit weiter zu optimieren ist gemäß einer ersten Ausführungsform der Erfindung vorgesehen, dass der Zwischenpuffer verstellbar angeordnet ist zwischen einer Beladeposition, an welcher er, vorzugsweise ausschließlich, und gleichzeitig mit K Kunststoffspritzgussteilen mit Hilfe der zweiten Ablagemittel beladen wird und einer Entnahmeposition, in der die K Kunststoffspritzgussteile, mit dem Ziel, diese auf die U Untergruppen zu verteilen, entnommen werden, wobei die Gruppierung zu den Untergruppen bzw. die Ablage in einer entsprechenden Ablageebene mit ersten Ablagemitteln erfolgt, wobei es besonders bevorzugt ist, wenn mit diesen ersten Ablagemitteln die K Kunststoffspritzgussteile an der Entnahmeposition auch aus dem Zwischenpuffer entnommen werden. Denkbar ist alternativ auch die Entnahme mit einem Übergabegreifer, der die K Kunststoffspritzgussteile an die ersten Ablagemittel übergibt. Im Hinblick auf die Art des Verstellens des Zwischenpuffers gibt es unterschiedliche Möglichkeiten. Bevorzugt ist der Zwischenpuffer derart angeordnet, dass er rotatorisch und/oder translatorisch zwischen der Beladeposition und der Entnahmeposition verstellbar ist. Im Falle der translatorischen Verstellbarkeit des Zwischenpuffers ist es bevorzugt, wenn der Verstellweg senkrecht zu einem Verstellweg von Entnahmemittel angeordnet ist, die zur Entnahme der K Kunststoffspritzgussteile aus den K Kavitäten der Spritzgussvorrichtung dienen. Gemäß einer alternativen Ausführungsform der Erfindung ist der Zwischenpuffer stationär angeordnet und die K Kunststoffspritzgussteile werden mit Hilfe eines Greifers aus dem Zwischenpuffer entnommen und hin zu dem Zwischenspeicher oder direkt zu den Endverpackungen transportiert, wobei dieser Greifer von den ersten Ablagemitteln gebildet sein kann oder von einem zusätzlich hierzu vorgesehenen Übergabegreifer, mit dem die Kunststoffspritzgussteile unmittelbar aus dem Zwischenpuffer entnommen und an die ersten Ablagemittel oder zunächst einem weiteren Übergabegreifer übergeben werden.

Bevorzugt befindet sich die Entnahmeposition oberhalb der Ablageebene, d.h. oberhalb eines Zwischenspeichers oder oberhalb der Endverpackungen, so dass die Ablagemittel zur Entnahme der K Kunststoffspritzgussteile aus dem Zwischenpuffer und der darauf folgenden Gruppierung zu Untergruppen in der Ablageebene (bis auf einen möglichen Rasterhub) im Wesentlichen nur eine Vertikalbewegung ausführen muss. Um dies zu bewerkstelligen muss dann der Zwischenpuffer vor dem Ablegen der K Kunststoffspritzgussteile in der Ablageebene wieder in Richtung der Beladeposition bewegt werden.

Erfindungsgemäß wird die Ablageebene von einem Zwischenspeicher gebildet, aus dem die einzige (und bevorzugt nacheinander mehrere) oder die mehreren Endverpackungseinheit(en) beladen werden, wobei als Zwischenspeicher ein bevorzugt plattenförmiger Zwischenspeicher mit einer Vielzahl von in einer Ablageebene nebeneinander angeordneten Ablagepositionen eingesetzt wird und wobei solange K Kunststoffspritzgussteile aus den K Kavitäten entnommen (und nach einer vorherigen Ablage im Zwischenpuffer) gleichmäßig auf die U Untergruppen in den Zwischenspeicher verteilt werden, bis jede Untergruppe L Kunststoffspritzgussteile aufweist, wobei die Anzahl L der Kunststoffspritzgussteile einer Untergruppe der Anzahl A von maximal in einer Endverpackungseinheit ladbaren Kunststoffspritzgussteilen oder einem ganzzahligen Teiler von A entspricht. Dieser Ausführungsform liegt der Gedanke zugrunde, die aus den K Kavitäten entnommenen, und zuvor im Zwischenpuffer kurzzeitig zwischengepufferten K Kunststoffspritzgussteile geordnet in Untergruppen in den Zwischenspeicher abzuladen, d.h. gleichmäßig in diesem auf die U Untergruppen zu verteilen. Dabei ist es möglich, dass bei jedem Ablagezyklus immer nur ein Kunststoffspritzgussteil pro Untergruppe abgelegt wird, oder aber mehrere Kunststoffspritzgussteile pro Untergruppe, und zwar jeweils in jeder Untergruppe gleichviele Spritzgussteile. In jedem Fall sind mehrere Ablagezyklen zum Füllen der Untergruppen notwendig, wobei der Zwischenpuffer bevorzugt deutlich mehr Kunststoffspritzgussteile fasst als eine Endverpackungseinheit. Das Entnehmen von K Kunststoffspritzgussteilen aus dem Zwischenspeicher und das Ablegen in den Untergruppen mittels der ersten Ablagemittel erfolgt mehrfach und wird solange wiederholt, bis in jeder Untergruppe eine Anzahl L Kunststoffspritzgussteile vorhanden ist, wobei die Anzahl L der Kunststoffspritzgussteile einer Untergruppe der Anzahl A von den einer der Endverpackungseinheit zu ladenden (maximal beladbaren) Kunststoffspritzgussteilen oder einem ganzzahligen Teiler von A entspricht. Mit der vorgeschlagenen Variante ist es möglich, unabhängig von der fixen Anzahl K Kavitäten des Spritzgusswerkzeuges Endverpackungseinheiten mit einer beliebigen Anzahl A von als Pipettenspitzen oder medizinische Reaktionsgefäße ausgebildeten Kunststoffspritzgussteilen ohne überbleibenden Überschuss zu befüllen. Es können in einer Spritzgussanlage mit 32 Kavitäten beispielsweise Verpackungseinheiten mit 105 Kunststoffspritizgussteilen bestückt werden, ohne dass die Notwendigkeit besteht, gleichzeitig 32 Verpackungseinheiten zu befüllen. Dies kann beispielsweise dadurch realisiert werden, dass in 105 Ablagezyklen insgesamt 32 Untergruppen mit jeweils 105 Kunststoffspritzgussteilen auf dem Zwischenspeicher gebildet werden, und dass nach dem Fertigstellen der 32 Untergruppen beispielsweise eine, oder bevorzugt mehr, insbesondere 2, 4, 8, 16 oder 32 Verpackungseinheiten nacheinander, in Gruppen oder alle gleichzeitig jeweils mit 105 Kunststoffspritzgussteilen bestückt werden. Ebenso ist es möglich, 32 Untergruppen mit jeweils 21 Kunststoffspritzgussteilen zu bilden, wobei dann immer fünf Untergruppen zu einer Endverpackungseinheit zusammengefasst werden können. Die Herstellungsnachvollziehbarkeit ist insofern gegeben, als dass zu jeder Endverpackungseinheit eine definierte Aussage darüber getroffen werden kann, aus welchen fünf Kavitäten genau die Kunststoffspritzgussteile entstammen. Analog ist es möglich, 32 Untergruppen mit jeweils sieben Kunststoffspritzgussteilen zu bilden und jeweils 15 Untergruppen zu einer Endverpackungseinheit zusammenzufassen. Ebenso können 32 Untergruppen mit jeweils drei Kunststoffspritzgussteilen gebildet und jeweils 35 Untergruppen pro Endverpackungseinheit zusammengefasst werden. Bevorzugt entspricht die Anzahl V der gleichzeitig zu beladenden Endverpackungseinheiten nicht der Anzahl der Kavitäten K. Ganz besonders bevorzugt entspricht der Anzahl V der zu beladenden Endverpackungseinheiten einem ganzzahligen Teiler von A. Es ist also auch möglich, gleichzeitig immer nur eine Endverpackungseinheit aus dem Zwischenspeicher zu bestücken oder mehrere Endverpackungseinheiten gleichzeitig oder nacheinander. Grundsätzlich ist es möglich in der Vorrichtung einen einzigen Zwischenspeicher einzusetzen. Bevorzugt sind mehrere, bevorzugt verstellbare, z.B. rotierbare oder translatorisch verstellbare Zwischenspeicher, z.B. in der Form von Werkstückträgern vorgesehen.

Bevorzugt erfolgt das Umladen der Untergruppen in die Endverpackungseinheiten, d.h. das Befüllen der mindestens einen Endverpackungseinheit aus dem Zwischenspeicher mit mindestens einem von den ersten Ablagemitteln und den zweiten Ablagemitteln separaten Greifer.

In den Endverpackungseinheiten werden die Kunststoffspritzgussteile jeweils in einer, bevorzugt horizontalen Ablageebene nebeneinander abgelegt, wobei es besonders bevorzugt ist, wenn im Falle des gleichzeitigen Befüllens mehrere Endverpackungseinheiten, diese in einer gemeinsamen Ebene angeordnet sind bzw. eine gemeinsame Ablageebene bilden.

Besonders zweckmäßig ist es, wenn die Kunststoffspritzgussteile einer Untergruppe in einer festen Relativposition zueinander angeordnet sind. Ganz besonders bevorzugt ist es, wenn die Untergruppen in der Ablageebene erkennbar sind, was dadurch realisiert werden kann, dass die Untergruppen mit Abstand zueinander angeordnet werden, was jedoch nicht zwingend ist. Wesentlich ist lediglich, dass eine Steuereinheit (Steuermittel) die Position der zu einer bestimmten Untergruppe gehörenden Kunststoffspritzgussteile erkennt. Dabei können grundsätzlich mehrere Kunststoffspritzgussteile unterschiedlicher Untergruppen unmittelbar nebeneinander angeordnet werden.

Besonders zweckmäßig ist es, wenn die K Kunststoffspritzgussteile im Zwischenspeicher so abgelegt werden, dass die Anzahl U der Untergruppen der Anzahl V der Endverpackungseinheiten oder einem ganzzahligen Vielfachen von V nicht entspricht oder alternativ entspricht.

Besonders zweckmäßig ist es, wenn als Zwischenspeicher ein plattenartiger Zwischenspeicher vorgesehen ist, der eine der maximalen Ablagepositionen entsprechende Anzahl von Vertiefungen oder Aufsteckelementen aufweist. Es ist daher ein einziger Zwischenpuffer vorgesehen. Auch ist es möglich mehrere Zwischenpuffer zur Aufnahme eines einzigen Schusses von Kunststoffspritzgussteilen vorzusehen, die in der Art von Werkstückträgern auf einer Bewegungsbahn zwischen einer Belade- und einer Entnahmeposition verstellt werden.

Die Erfindung führt auch auf eine Verpackungsvorrichtung, die bevorzugt zur Durchführung des erfindungsgemäßen Verfahrens bestimmt und ausgebildet ist. Kern der Verpackungsvorrichtung ist eine Steuereinheit (Steuermittel), die die Handhabungsmittel, d.h. Entnahmemittel und/oder erste Ablagemittel und/oder zweite Ablagemittel und/oder ggf. vorgesehene Übergabegreifer und/oder einen Verstellmechanismus für den fakultativen Zwischenpuffer so ansteuert, dass das Verfahren wie zuvor beschrieben ausgeführt werden kann.

Wie erwähnt, dient das Verfahren bzw. die Vorrichtung zur Verpackung der Kunststoffspritzgussteile in Endverpackungseinheiten, die der Verpackungsvorrichtung zugeführt und aus dieser wieder nach Befüllung ausgeschleust werden müssen. Im Hinblick auf die Ausbildung der Zuführund/oder Ausschleusemittel gibt es unterschiedliche Möglichkeiten. Besonders bevorzugt ist eine Ausführungsform, bei der es sich zumindest teilweise um kombinierte Zuführ- und Ausschleusemittel handelt, die beispielsweise ein gemeinsames Transportband oder einen gemeinsamen rotierbaren Tisch umfassen, wobei im Falle des Vorsehens eines rotierbaren Tisches mit diesem an eine Beladeposition zur Beladung einer einzigen oder gleichzeitig mehrere Endverpackungseinheiten transportiert und nach dem vollständigen Befüllen jeweils mit A Kunststoffspritzgussteilen aus der Beladeposition weg rotiert werden und so aus der Verpackungsvorrichtung ausgeschleust werden.

Gegebenenfalls werden die Verpackungseinheiten von dem Drehtisch wieder einem anliefernden Transportband zugeführt. Auch ist es denkbar die einzige Endverpackungseinheit oder die mehreren Endverpackungseinheiten unmittelbar auf einem Transportband zu füllen oder nach dem Befüllen nicht auf ein anlieferndes Transportband sondern auf ein davon unterschiedliches abführendes bzw. ausschließendes Transportband zu befördern. Auch ist es möglich, als kombinierte Zuführ- und/oder Ausschleusemittel umlaufende Werkstückträger vorzusehen, auf denen die Endverpackungseinheiten transportiert werden, wobei die Auflage auf die Werkstückträger und/oder die Entnahme von den Werkstückträgern beispielsweise mittels eines Greifers erfolgt.

Die Erfindung führt auch auf eine Spritzgussanlage mit einer K Kavitäten zum gleichzeitigen Herstellen von K Kunststoffspritzgussteilen aufweisenden Spritzgussteilen aufweisenden Sprüzgussvorrichtung, die derart ausgebildet ist, dass mit dieser Pipettenspitzen oder medizinische Reaktionsgefäße herstellbar sind. Diese Spritzgussanlage umfasst neben der Spritzgussvorrichtung eine nach dem Konzept der Erfindung ausgebildete Verpackungsvorrichtung. Bevorzugt ist eine Öffnungs- und Schließrichtung des Spritzgusswerkzeuges parallel zu einer translatorischen Verstellrichtung des Zwischenpuffers ausgerichtet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Spritzgussvorrichtung mit einer Spritzgussform, die in dem gezeigten Ausführungsbeispiel eine fixe Anzahl von K = 16 Kavitäten zum gleichzeitigen Herstellen von K als Pipettenspitzen oder medizinische Reaktionsbehälter ausgebildeten Kunststoffspritzgussteilen aufweist,

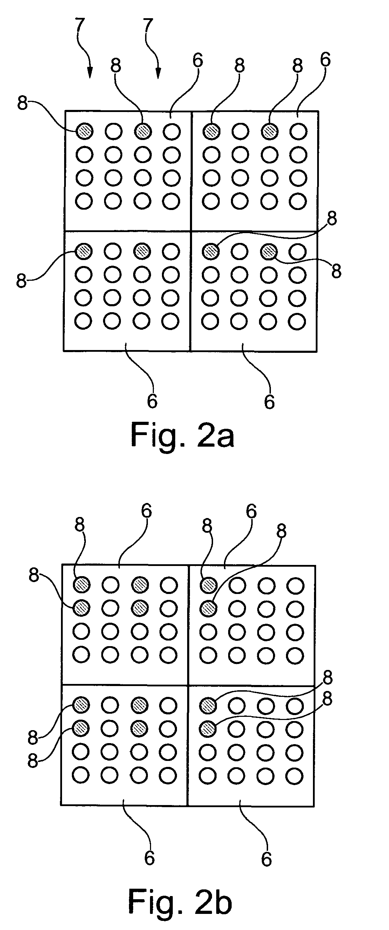

- Fig. 2a und 2b:: vier Endverpackungseinheiten nach jeweils einer unterschiedlichen Anzahl von Ablagezyklen, wobei in dem gezeigten Ausführungsbeispiel in jeder Endverpackungseinheit zwei Untergruppen entstehen (alternativ nur eine einzige Untergruppe oder mehr als zwei Untergruppen), die bei jedem Ablagezyklus, d.h. nach jeder Entnahme aus dem Zwischenpuffer um ein Spritzgussteil erweitert werden - bezüglich einer bevorzugteren Ausführungsform mit Zwischenspeicher wird als Ausführungsbeispiel auf die EP 2 323 930 B1 und insbesondere dort auf die Fig. 2a bis 3 mit zugehöriger Figurenbeschreibung verwiesen, wobei dem zusätzlich ein Zwischenpuffer vorgeschaltet ist,
- Fig. 3:: eine Verpackungsvorrichtung zur Ausführung des erfindungsgemäßen Verfahrens, und
- Fig. 4:: eine schematisch dargestellte Spritzgussanlage mit einer Verpackungsvorrichtung, die einen translatorisch verstellbaren Zwischenpuffer aufweist.

In den Figuren sind gleiche Elemente und Elemente mit der gleichen Funktion mit den gleichen Bezugszeichen gekennzeichnet.

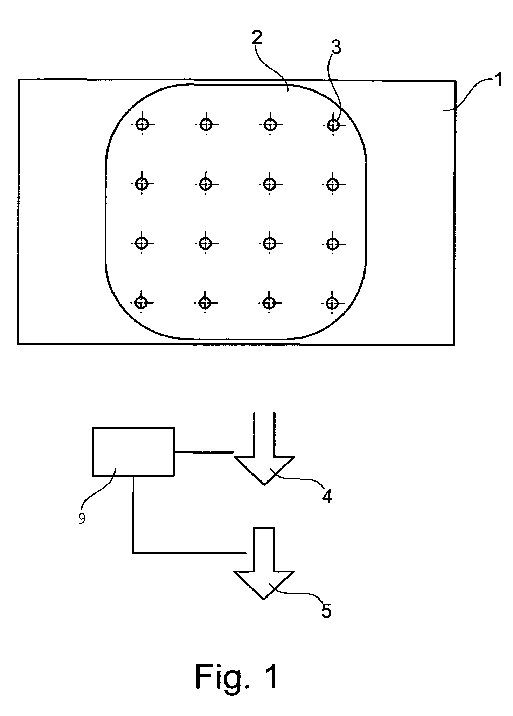

In Fig. 1 ist als Teil einer Spritzgussanlage eine Spritzgussvorrichtung 1, umfassend ein Spritzgusswerkzeug 2, mit K=16 Kavitäten 3 zum gleichzeitigen Herstellen von K=16 als Pipettenspitzen oder medizinische Reaktionsgefäße ausgebildeten Kunststoffspritzgussteilen 8 gezeigt. Der Spritzgussvorrichtung 1 sind beispielsweise als Sauggreifer, vorzugsweise mit einer der Anzahl K der Kavitäten entsprechenden Anzahl an Saugelementen, ausgebildete Entnahmemittel 4 zugeordnet, die lediglich stilisiert als Pfeil angedeutet sind, wobei die Entnahmemittel 4 Teil einer Verpackungsvorrichtung 16 sind. Die Entnahmemittel 4 dienen in dem gezeigten Ausführungsbeispiel ausschließlich, zur Entnahme der Spritzgussteile 8 aus den Kavitäten 3, wobei die mittels der Entnahmemittel 4 entnommenen Spritzgussteile 8 als (Übergabe-) Greifer ausgebildete Ablagemittel 5 übergeben werden, mit welchen dann die Ablage bzw. Zwischenpufferung in einem hier nicht dargestellten Zwischenpuffer erfolgt. Aus dem Zwischenpuffer werden die Spritzgussteile gemäß einer ersten Alternative entweder in einem bevorzugt plattenförmigen Zwischenspeicher gruppiert und aus dem Zwischenspeicher nach der Gruppierung in Endverpackungseinheiten überführt oder es erfolgt gemäß einer zweiten Alternative unter Verzicht auf einen Zwischenspeicher unmittelbar die Gruppierung zu Untergruppen in den Endverpackungseinheiten. Die Greifer der Entnahmemittel und der zweiten Ablagemittel können beispielsweise als mechanische Greifer und/oder Unterdruckgreifer ausgebildet sein.

In den Figuren 2a und 2b ist nun die zuvor als zweite Alternative bezeichnete Ausführungsform gezeigt, nach welcher unter Verzicht auf einen Zwischenpuffer die Gruppierung unmittelbar in den Endverpackungseinheiten erfolgt Bezüglich der bevorzugten Ausführungsform, bei welcher auf einen Zwischenspeicher nicht verzichtet wird, sondern bei welcher die K Kunststoffspritzgussteile nach Zwischenpufferung im Zwischenpuffer in einen Zwischenspeicher gruppiert werden, wird auf die EP 2 323 930 B1 verwiesen und dort insbesondere auf die Figuren 2a bis 3 mit zugehöriger Figurenbeschreibung, wobei in diesem Dokument (selbstverständlich) nicht die Rede von dem erfindungsgemäßen Zwischenpuffer ist, sondern die Gruppierung zu Untergruppen in dem Zwischenspeicher beschrieben wird, wie sie bevorzugt auch bei dem erfindungsgemäßen Verfahren zur Anwendung kommt. Ein Zwischenpuffer befindet sich gedanklich vor dem beschriebenen Zwischenspeicher.

Jedenfalls sind in den Fig. 2a und 2b vier Endverpackungseinheiten 6 dargestellt, die bei jedem Ablageschritt gleichzeitig befüllt werden. In dem gezeigten Ausführungsbeispiel weist jede Endverpackungseinheit A = 16 Ablageplätze zur maximalen Aufnahme von A = 16 Kunststoffspritzgussteilen 8 auf, wobei A (anstatt 16 auch jede andere ganze Zahl sein kann). Im gezeigten Ausführungsbeispiel besteht die Aufgabe darin, jede Endverpackungseinheit 6 mit jeweils U = zwei Untergruppen 7 von Kunststoffspritzgussteilen 8 zu befüllen, wobei jede Untergruppe 7 in dem gezeigten Ausführungsbeispiel kavitätenrein sein sollen, d.h. Kunststoffspritzgussteile nur aus einer Kavität beinhalten soll. Jede Untergruppe besteht in dem gezeigten Ausführungsbeispiel aus L = acht Kunststoffsprüzgussteilen 8. Zur vollständigen Befüllung der Endverpackungseinheiten 6 sind also acht Entnahme- und Ablagezyklen in den Endverpackungen (nach jeweils vorheriger Ablage im Zwischenpuffer) notwendig, wenn bei jedem Ablagezyklus jede Untergruppe 7 um ein Kunststoffspritzgussteil erweitert wird und gleichzeitig zwei Kunststoffspritzgussteile 8 pro Endverpackungseinheit 6 abgelegt werden.

Fig. 2a zeigt dabei die Befüllsituation nach einem einzigen Ablagezyklus und Fig. 2b nach zwei nacheinanderfolgenden Ablagezyklen. Eine Vorgruppierung der Kunststoffspritzgussteile 8 in einem Zwischenspeicher, wie dies in der EP 2 323 930 D1 im Detail beschrieben und bevorzugt ist, erfolgt ausdrücklich nicht. Sämtliche Endverpackungseinheiten 6 sind, wie zuvor beschrieben, mit jeweils mehreren, kavitätenreinen Untergruppen 7 zu befüllen. Hierzu steuert eine in Fig. 1 angedeutete Steuereinheit 9 (Steuermittel) die Entnahmemittel 4 und die zweiten Ablagemittel 5 sowie weitere, nicht gezeigte erste Ablagemittel entsprechend an.

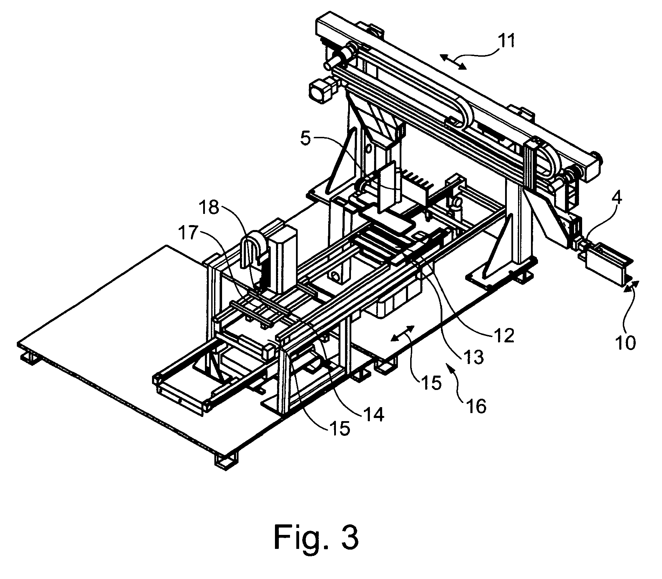

In Fig. 3 ist eine Verpackungsvorrichtung 16 gezeigt. Diese umfasst Entnahmemittel 4, mit denen gleichzeitig K Kunststoffspritzgussteile aus K Kavitäten einer nicht gezeigten Kunststoffspritzgusseinrichtung entnommen werden können. Die Entnahmemittel können einen (kurzen) Entnahmehub 10 vollführen, wobei dieser Entnahmehub in Öffnungsrichtung eines Spritzgusswerkzeugs erfolgt. Nach der Entnahme werden die Entnahmemittel 4 senkrecht zur Öffnungsrichtung des Werkzeugs entlang der Achse 11 bewegt, um in den Bereich von zweiten Ablagemitteln 5 zu gelangen, mit denen die Kunststoffspritzgussteile 8 von den Entnahmemitteln 4 übernommen und nach einer Verschwenkbewegung nach unten um 90° in einem Zwischenpuffer 12 abgelegt werden.

In dem gezeigten Ausführungsbeispiel erfolgt die Übernahme der K Kunststoffspritzgusseitel von den Entnahmemitteln 4 unmittelbar mittels der zweiten, einen Greifer umfassenden Ablagemittel 5, wobei alternativ noch ein Übergabegreifer zwischengeschaltet werden kann. In Fig. 3 sind beide Verschwenkpositionen der zweiten Ablagemittel 5 (seitlich zur Übernahme und nach unten zur Ablage im Zwischenpuffer) gezeigt. Zur Ablage kann der Greifer der Entnahmemittel einen Verükalhub vollführen. Der Zwischenpuffer 12 wird in einem Bereich unterhalb der zweiten Ablagemittel 5 in eine Beladeposition 13 beladen und wird dann, hier beispielhaft und bevorzugt translatorisch (alternativ z.B. rotatorisch in Form eines Drehtisches) von der Beladeposition in eine Entnahmeposition 14 verstellt, wobei die Bewegungsrichtung 15 zwischen der Beladeposition und der Entnahmeposition 14 senkrecht zu der Achse 11 sowie parallel zur Öffnungsrichtung des Spritzgusswerkzeuges sowie parallel zum Entnahmehub 10 erfolgt. Hierdurch ist eine besonders platzsparende Anordnung möglich. Die Entnahmeposition 14 befindet sich in dem gezeigten Ausführungsbeispiel oberhalb von einem Zwischenspeicher 17 in welchem die aus dem Zwischenpuffer 12 entnommenen K Kunststoffspritzgussteile auf Untergruppen verteilt werden. Die Entnahme der K Kunststoffspritzgussteile aus dem Zwischenpuffer und die Ablage in den Untergruppen im Zwischenspeicher 17 erfolgt mit Hilfe von ersten Ablagemitteln 18.

Hierzu führen die ersten Ablagemittel 18 im Wesentlichen bis auf den Gruppenverstellhub (Rasterhub) lediglich Vertikalbewegungen aus, was dadurch möglich ist, dass sich die Beladeposition 13 des Zwischenpuffers 12 oberhalb des Zwischenspeichers 17 befindet. Nach der Entnahme der K Kunststoffspritzgussteile aus dem Zwischenspeicher muss der Zwischenpuffer 12 aus der Entnahmeposition herausbewegt werden.

Aus dem Zwischenspeicher 17 heraus erfolgt nun die nicht gezeigte Beladung von Endverpackungseinheiten 6, wobei es bevorzugt ist, wenn nacheinander Endverpackungseinheiten 6 befüllt werden und zwar jeweils mit einer einzigen oder mit mehreren der Untergruppen 7 aus dem Zwischenspeicher 17. Alternativ werden mehrere Endverpackungseinheiten 6 gleichzeitig aus dem Zwischenspeicher 17 jeweils mit einer einzigen oder mit mehreren der Untergruppen 7 befüllt.

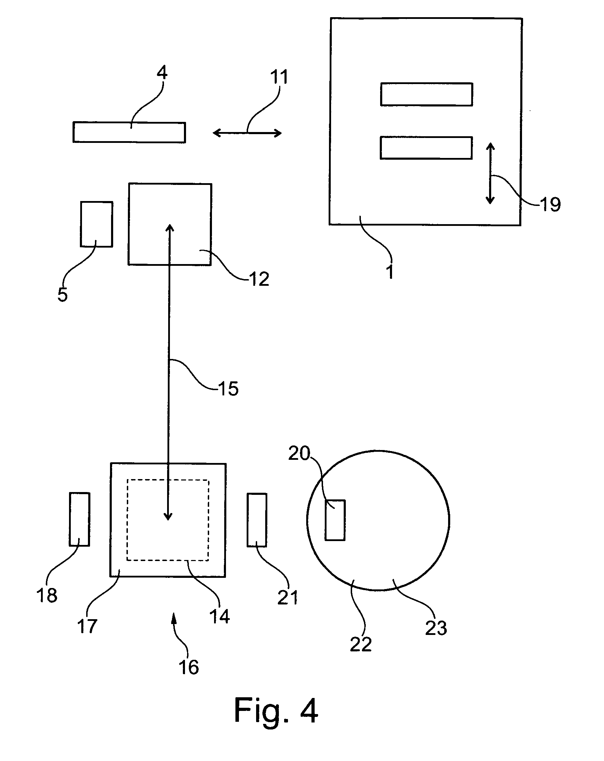

In Fig. 4 ist nochmals stark schematisiert die Verpackungsvorrichtung 16 gemäß Fig. 3 gezeigt, wobei hier zur Vervollständigung des Bildes eine gesamte Spritzgussanlage mit Spritzgussvorrichtung 1 gezeigt ist.

Zu erkennen ist eine Öffnungsrichtung 19 des Spritzgusswerkzeuges die parallel zu einem Entnahmehub verläuft. Ferner ist zu erkennen die Achse 11 entlang derer die Entnahmemittel 4 verstellbar sind. Ferner ist zu erkennen der Zwischenpuffer 12 in der Beladeposition 13, in welcher dieser mit Hilfe von zweiten Ablagemitteln 5 beladen wird. Der Zwischenpuffer 12 verfährt nach dem Beladen entlang der Achse 15 zu einer strichliert dargestellten Entnahmeposition 14 oberhalb eines Zwischenspeichers 17. In den Zwischenspeicher 17 werden die K Kunststoffspritzgussteile aus dem Zwischenpuffer 12 mit Hilfe von ersten Ablagemitteln 18 abgelegt. Das Beladen von Endverpackungseinheiten 6, 20 erfolgt mit einem weiteren Greifermechanismus 21. Bei einer Ausführungsform, bei welcher unmittelbar die Gruppierung in den Endverpackungseinheiten vorgenommen wird, kann auf diesen Greifermechanismus 21 bei Bedarf verzichtet werden. Die Endverpackungseinheiten 20 werden mit Zuführmitteln 22 der Verpackungsvorrichtung 16 zugeführt und mit Hilfe von Ausschleusemitteln 23, die in dem gezeigten Ausführungsbeispiel hier mit den Zuführmitteln 22 kombiniert sind wieder aus der Verpackungsvorrichtung ausgeschleust.

## Patentansprüche

1. Verpackungsverfahren zum Verpacken von als Pipettenspitzen oder medizinische Reaktionsgefäße ausgebildeten Kunststoffspritzgussteilen (8) in Endverpackungseinheiten (6, 20), umfassend die Schritte:
- gleichzeitige Entnahme von K Spritzgussteilen aus K Kavitäten,
- gleichzeitige Ablage der K Kunststoffspritzgussteile (8), gleichmäßig verteilt auf U Untergruppen (7) mit Hilfe von einen Greifer umfassenden ersten Ablagemitteln (18) in einer, bevorzugt horizontalen, Ablageebene,
- mehrfaches Entnehmen von K Spritzgussteilen aus den K Kavitäten und gleichmäßiges Verteilen der K Spritzgussteile auf die U Untergruppen (7), bis jede Untergruppe (7) L Kunststoffspritzgussteile (8) aufweist, wobei die Anzahl L der Kunststoffspritzgussteile (8) einer Untergruppe (7) der Anzahl A der in einer Endverpackungseinheit (6, 20) maximal aufnehmbaren Kunststoffspritzgussteilen (8) oder einem ganzzahligen Teiler von A entspricht,
- Auffüllen mindestens einer Endverpackungseinheit mit A Kunststoffspritzgussteilen (8),
wobei die Ablageebene von einem Zwischenspeicher (17) gebildet wird, aus dem gleichzeitig eine einzige oder aus dem gleichzeitig mehrere Endverpackungseinheiten (6, 20) beladen werden, und dass als Zwischenspeicher (17) ein Zwischenspeicher (17) mit einer Vielzahl von in einer Ablageebenen nebeneinander angeordneten Ablagepositionen eingesetzt wird, und dass solange K Kunststoffspritzgussteile (8) aus den K Kavitäten entnommen und gleichmäßig auf die U Untergruppen (7) in dem Zwischenspeicher (17) verteilt werden, bis jede Untergruppe (7) L Kunststoffspritzgussteile aufweist, wobei die Anzahl L der Kunststoffspritzgussteile (8) einer Untergruppe (7) der Anzahl A von maximal in eine Endverpackungseinheit (6, 20) ladbaren Kunststoffspritzgussteilen (8) oder einem ganzzahligen Teiler von A entspricht, oder
wobei das Verteilen der K Kunststoffspritzgussteile (8) auf die Untergruppen (7) ausschließlich beim Auffüllen der mindestens einen Endverpackungseinheit in der Endverpackungseinheit erfolgt und dass solange Kunststoffspritzgussteile (8) auf die Untergruppen (7) verteilt werden, bis die mindestens eine Endverpackungseinheit vollständig mit A Kunststoffspritzgussteilen (8) befüllt ist,
**dadurch gekennzeichnet,**
**dass** die K Spritzgussteile vor dem Verteilen auf die U Untergruppen (7) in der Ablageebene in einem Zwischenpuffer (12) mit von den ersten Ablagemitteln (18) separaten zweiten Ablagemittel (5), insbesondere mit einem Schlauchpaket oder mit einem Greifer, abgelegt werden, und dass in dem Zwischenpuffer gleichzeitig ausschließlich ein Schuss von K Kunststoffspritzgussteilen (8) aufgenommen wird, und dass die K Kunststoffspritzgussteile (8) mit samt des Zwischenpuffers zwischen einer Beladeposition (13), in der der Zwischenpuffer, vorzugsweise mit ausschließlich, K Kunststoffspritzgussteilen (8) beladen wird und einer Entnahmeposition (14), in der die K Kunststoffspritzgussteile (8) zum Verteilen der K Kunststoffspritzgussteile (8) auf die U Untergruppen (7) aus dem Zwischenpuffer, insbesondere mittels der ersten Ablagemittel (5), entnommen werden, insbesondere rotatorisch und/oder translatorisch, verstellt wird, oder dass der Zwischenpuffer (12) stationär angeordnet ist und die K Kunststoffspritzgussteile (8) mit den ersten Ablagemitteln (5) oder einem Übergabegreifer aus der Zwischenpuffer (12) entnommen werden.

2. Verpackungsverfahren nach Anspruch 1,
**dadurch gekennzeichnet,**
**dass** aus dem Zwischenpuffer (12) vor dem erneuten Befüllen mit K Kunststoffspritzgussteilen (8) K Kunststoffspritzgussteile (8) entnommen und auf die U Untergruppen (7) verteilt werden.

3. Verfahren nach einem der Ansprüche 1 oder 2,
**dadurch gekennzeichnet,**
**dass** die K Kunststoffspritzgussteile (8) derart im Zwischenspeicher (17) abgelegt werden, dass die Anzahl U der Untergruppen (7) der Anzahl V der Endverpackungseinheiten (6, 20) oder einem ganzzahligen Vielfachen von V nicht entspricht oder entspricht.

4. Verfahren nach einem der vorhergehenden Ansprüche,
**dadurch gekennzeichnet,**
**dass** als Zwischenspeicher (17) eine Platte mit einer der Ablagepositionen entsprechenden Anzahl von Vertiefungen oder Aufsteckelementen verwendet wird.

5. Verfahren nach einem der vorhergehenden Ansprüche,
**dadurch gekennzeichnet,**
**dass** die Kunststoffspritzgussteile (8) einer bestimmten Kavität oder aus bestimmten Kavitäten immer in einer bestimmten Untergruppe (7) oder in bestimmten Untergruppen (7) abgelegt wird/werden.

6. Verfahren nach einem der vorhergehenden Ansprüche,
**dadurch gekennzeichnet,**
**dass** die V Verpackungseinheiten jeweils mit einer einzigen Untergruppe (7) oder jeweils mit mehreren Untergruppen (7) beladen werden.

7. Verpackungsverfahren nach einem der vorhergehenden Ansprüche,
**dadurch gekennzeichnet,**
**dass** die Endverpackungseinheit(en) (6, 20) derart ausgebildet ist/sind, dass diese in einem, insbesondere als Blutanalysegerät ausgebildeten, Analysegerät verwendbar sind und/oder dass die Endverpackungseinheit(en) (6, 20) einzeln oder in Gruppen in einer Umverpackung, insbesondere einen Umkarton und/oder eine Folienverpackung, verpackt werden, und/oder dass die Endverpackung(en) (6 ,20) ein Trägerteil, insbesondere aus Metall, bevorzugt Aluminium oder Kunststoff, mit ausschließlich A Aufnahmeplätzen zur Aufnahme der A Spritzgussteile aufweist/en.

8. Verpackungsverfahren nach einem der vorhergehenden Ansprüche,
**dadurch gekennzeichnet,**
**dass** jede Untergruppe (7) bei jedem Ablagezyklus immer um die gleiche Anzahl von Kunststoffspritzgussteilen (8), vorzugsweise um ein einziges Spritzgussteil, erweitert wird.

9. Verpackungsverfahren nach einem der vorhergehenden Ansprüche,
**dadurch gekennzeichnet,**
**dass** die Anzahl A einem ganzzahligen Vielfachen der Kavitätenzahl oder nicht einem ganzzahligem Vielfachen der Kavitätenzahl entspricht.

10. Verpackungsvorrichtung zum Verpacken von als Pipettenspitzen oder medizinische Reaktionsgefäße ausgebildeten Kunststoffspritzgussteilen (8) in Endverpackungseinheiten (6, 20), ausgebildet zur Durchführung eines Verpackungsverfahrens nach einem der vorhergehenden Ansprüche, umfassend:
- zum gleichzeitige Entnahmen von K Spritzgussteilen aus K Kavitäten ausgebildeten Entnahmemitteln (4),
- zum gleichzeitige Ablegen der K Kunststoffspritzgussteile (8), gleichmäßig verteilt auf U Untergruppen (7) ausgebildeten, einen Greifer umfassende erste Ablagemittel (18)
- Zuführmittel (22) zum Zuführen von Endverpackungseinheiten (6, 20) sowie Ausschleusmitteln (23) zum Ausschleusen von befüllten Verpackungseinheiten aus der Verpackungsvorrichtung (16),
- Mittel zum Auffüllen mindestens einer Endverpackungseinheit mit A Kunststoffspritzgussteilen (8),
- Steuermittel (9) zum Ansteuern der Entnahmemittel (4) und/oder der ersten Ablagemittel (18), die diese derart ansteuernd ausgebildet sind, dass mehrfache K Spritzgussteilen aus den K Kavitäten entnehmbar und gleichmäßig auf die U Untergruppen (7) verteilbar sind bis jede Untergruppe L Kunststoffspritzgussteile (8) aufweist, wobei die Anzahl L der Kunststoffspritzgussteile (8) einer Untergruppe (7) der Anzahl A der in einer Endverpackungseinheit (6, 20) maximal aufnehmbaren Kunststoffspritzgussteilen (8) oder einem ganzzahligen Teiler von A entspricht,
wobei die Ablageebene von einem Zwischenspeicher (17) gebildet ist, aus dem die mindestens eine Endverpackungseinheit (6, 20) mittels der Mittel zum Auffüllen beladbar ist, und dass als Zwischenspeicher (17) ein Zwischenspeicher (17) mit einer Vielzahl von in einer Ablageebene nebeneinander angeordneten Ablagepositionen vorgesehen ist, und dass die Steuermittel (9) die Entnahmemittel (4) und/oder die ersten und/oder zweiten Ablagemittel (5, 18) derart ansteuernd ausgebildet sind, dass solange K Kunststoffspritzgussteile (8) aus den K Kavitäten entnommen und gleichmäßig auf die U Untergruppen (7) in dem Zwischenspeicher (17) verteilbar sind, bis jede Untergruppe L Kunststoffspritzgussteile (8) aufweist, wobei die Anzahl L der Kunststoffspritzgussteile (8) einer Untergruppe (7) der Anzahl A von maximal in eine Endverpackungseinheit (6, 20) ladbaren Kunststoffspritzgussteilen (8) oder einem ganzzahligen Teiler von A entspricht,
oder
wobei die Steuermittel (9) die Entnahmemittel (4) und/oder die ersten und/oder zweiten Ablagemittel (5, 18) derart ansteuernd ausgebildet sind, dass das Verteilen der K Kunststoffspritzgussteile (8) auf die Untergruppen (7) mittels der, bevorzugt die ersten Ablagemittel (18) bildenden, Mittel zum Auffüllen ausschließlich beim Auffüllen der mindestens einen Endverpackungseinheit in der mindestens einen Endverpackungseinheit erfolgt und derart, dass solange Kunststoffspritzgussteile (8) auf die Untergruppen (7) verteilt werden, bis die mindestens eine Endverpackungseinheit vollständig mit A Kunststoffspritzgussteilen (8) befüllt ist,
**dadurch gekennzeichnet,**
**dass** zusätzlich zu den ersten Ablagemitteln (18) von den Entnahmemitteln (4) gebildete oder von diesen separate, von den Steuermitteln (9) ansteuerbare zweite Ablagemittel (5) zum Ablegen von K Kunststoffspritzgussteilen, vor dem Verteilen auf die U Untergruppen (7) in der Ablageebene, in einem Zwischenpuffer (12) vorgesehen sind und dass in dem Zwischenpuffer (12) gleichzeitig ausschließlich ein Schuss vom K Kunststoffspritzgussteilen aufnehmbar ist, und dass die Steuermittel (9) einen Antrieb des Zwischenpuffers (12) derart ansteuernd ausgebildet sind, dass, insbesondere ausschließlich, K Kunststoffspritzgussteile (8) mit samt des Zwischenpuffers (12) zwischen einer Beladeposition (13), in der der Zwischenpuffer (12), vorzugsweise mit ausschließlich, K Kunststoffspritzgussteilen (8) von den zweiten Ablagemitteln (5) beladbar ist und einer Entnahmeposition (14), in der die K Kunststoffspritzgussteile (8) zum Verteilen der, insbesondere ausschließlich K Kunststoffspritzgussteile (8) auf die U Untergruppen (7) aus dem Zwischenpuffer, insbesondere mittels der ersten Ablagemittel (18), entnehmbar sind, insbesondere rotatorisch und/oder translatorisch, verstellbar ist, oder dass der Zwischenpuffer stationär angeordnet ist und die Steuermitteln (9) die ersten Ablagemittel (18) oder einen Übergabegreifer derart ansteuernd ausgebildet sind, dass die K Kunststoffspritzgussteile (8) mit den ersten Ablagemitteln (18) oder einem Übergabegreifer aus der Zwischenpuffer entnommen werden.

11. Verpackungsvorrichtung nach Anspruch 10,
**dadurch gekennzeichnet,**
**dass** die Zuführmittel (22) und/oder die Ausschleusmittel (23) ein Transportband und/oder einen rotierbaren Tisch umfassen, mit dem/denen die Endverpackungen (6, 20) im leeren Zustand an eine Befüllposition förderbar sind, an welcher diese mit den A Kunststoffspritzgussteilen (8) beladen werden und mit dem/denen die befüllten Endverpackungen aus der Verpackungsvorrichtung (16) und ausschleusbar sind.

12. Spritzgussanlage mit einer K Kavitäten zur gleichzeitigen Herstellung von K als Pipettenspitzen oder medizinische Reaktionsgefäße ausgebildeten Kunststoffspritzgussteilen aufweisenden Spritzgussvorrichtung und mit Verpackungsvorrichtung (16) nach einem der Ansprüche 10 oder 11.

13. Spritzgussanlage nach Anspruch 12,
**dadurch gekennzeichnet,**
**dass** der Verpackungsvorrichtung (16) eine Umverpackungsvorrichtung nachgeordnet ist, mit der die mittels der Verpackungsvorrichtung (16) befüllten Endverpackungen (6, 20) einzeln oder in Gruppen in eine Umverpackung, insbesondere aus Pappe oder Kunststoff, verpackbar sind.

## Claims

1. A packaging method for packing plastic injection moulded parts (8) configured as pipette tips or medical reaction vessels into final packaging units (6, 20) comprising the steps of:
- simultaneous removal of K injection moulded parts from K cavities,
- simultaneous deposition of K injection moulded parts (8) evenly distributed among U subgroups (7) with the aid of first deposition means (18) comprising a gripper in a preferably horizontal deposition plane,
- multiple removal of K injection moulded parts from the K cavities and even distribution of K injection moulded parts among the U subgroups (7) until each subgroup (7) comprises L plastic injection moulded parts (8), wherein the number L of plastic injection moulded parts (8) of a subgroup (7) corresponds to the number A of plastic injection moulded parts (8) receivable as a maximum in a final packaging unit (6, 20) or to an integer divisor A,
- filling at least one final packaging unit with A plastic injection moulded parts (8),
wherein the deposition plane is formed by an intermediate storage (17), from which simultaneously a single or from which simultaneously a number of final packaging units (6, 20) are loaded, and in that the intermediate storage (17) used is an intermediate storage (17) with a plurality of adjacently arranged deposition positions in one plane, and in that K plastic injection moulded parts (8) continue to be removed from the K cavities and evenly distributed among the U subgroups (7) in the intermediate storage (17), until each subgroup (7) comprises L plastic injection moulded parts (8), wherein the number L of plastic injection moulded parts (8) of a subgroup (7) corresponds to the number A of plastic injection moulded parts (8) which can be loaded as a maximum into a final packaging unit (6, 20) or to an integer divisor of A,
or
wherein distributing the K plastic injection moulded parts (8) among the subgroups (7) takes place exclusively during filling the at least one final packaging unit in the final packaging unit, and in that plastic injection moulded parts (8) continue to be distributed among the subgroups (7), until the at least one final packaging unit is completely filled with A plastic injection moulded parts (8),
**characterised in that**
the K injection moulded parts, prior to being distributed among the U subgroups (7) in the deposition plane, are deposited in an intermediate buffer (12) with second deposition means (5) separate from the first deposition means (18), in particular with a tube package or with a gripper, and **in that** merely one shot of K plastic injection moulded parts (8) is simultaneously received in the intermediate buffer, and **in that** the K plastic injection moulded parts (8) together with the intermediate buffer are shifted, in particular rotationally and/or translatorily, between a loading position (13), in which the intermediate buffer is preferably loaded exclusively with K plastic injection moulded parts (8), and a removal position (14), in which the K plastic injection moulded parts (8) are removed, in particular by means of the first deposition means (18), from the intermediate buffer for distribution of the K plastic injection moulded parts (8) among the U subgroups (7), or **in that** the intermediate buffer (12) is fixed in a stationary position and the K plastic injection moulded parts (8) are removed with the first deposition means (18) or with a hand-over gripper from the intermediate buffer (12).

2. The method according to claim 1,
**characterised in that**
prior to renewed filling with K plastic injection moulded parts (8), K plastic injection moulded parts (8) are removed from the intermediate buffer (12) and distributed among the U subgroups (7).

3. The method according to claim 1 or 2,
**characterised in that**
the K plastic injection moulded parts (8) are deposited in the intermediate storage (17) such that the number U of subgroups (7) does not correspond or corresponds to the number V of final packaging units (6, 20) or an integer multiple of V.

4. The method according to one of the preceding claims,
**characterised in that**
the intermediate storage (17) used is a plate, in which the number of indentations or insertion elements corresponds to the deposition positions.

5. The method according to one of the preceding claims,
**characterised in that**
the plastic injection moulded parts (8) of a certain cavity or from certain cavities are always deposited in a certain subgroup (7) or in certain subgroups (7).

6. The method according to one of the preceding claims,
**characterised in that**
the V packaging units are loaded with a single subgroup (7) respectively, or with a number of subgroups (7), respectively.

7. The packaging method according to one of the preceding claims,
**characterised in that**
the one or more final packaging units (6, 20) are configured such that these can be used in an analysis device, in particular configured as a blood analysis device and/or **in that** one or more final packaging units (6, 20) are wrapped singly or in groups in an overpack, in particular in an outer carton and/or a film wrap, and/or in that the final packaging(s) (6, 20) comprise a carrier part, in particular of metal, preferably of aluminium or plastic, with exclusively A receiving places for receiving the A injection moulded parts.

8. The packaging method according to one of the preceding claims,
**characterised in that**,
for each deposition cycle, each subgroup (7) is always expanded by the same number of plastic injection moulded parts (8), preferably by a single injection moulded part.

9. The packaging method according to one of the preceding claims,
**characterised in that**
the number A corresponds or does not correspond to an integer multiple of the number of cavities.

10. A packaging device for packing plastic injection moulded parts (8) configured as pipette tips or medical reaction vessels into final packaging units (6, 20), configured for performing a packaging method according to one of the preceding claims, comprising:
- removal means (4) adapted for the simultaneous removal of K injection moulded parts (8) from K cavities,
- first deposition means (18) comprising a gripper and adapted to simultaneously deposit the K plastic injection moulded parts (8) evenly distributed among U subgroups (7),
- feeding means (22) for feeding final packaging units (6, 20) as well as discharge means (23) for discharging filled packaging units from the packaging device (16),
- means for filling at least one final packaging unit with A plastic injection moulded parts (8),
- control means (9) for activating the removal means (4) and/or the first deposition means (18) which are configured to activate the same such that multiple K injection moulded parts (8) can be removed and evenly distributed among the U subgroups (7), until each subgroup comprises L plastic injection moulded parts (8), wherein the number L of plastic injection moulded parts (8) corresponds to a subgroup (7) of the number A of plastic injection moulded parts (8) which can be received as a maximum in one final packaging unit (6, 20), or to an integer divisor of A,
wherein the deposition plane is formed by an intermediate storage (17), from which the at least one or the number of final packaging units (6, 20) can be simultaneously loaded, and in that the intermediate storage (17) provided is an intermediate storage (17) with a plurality of adjacently arranged deposition positions in a deposition plane, and in that the control means (9) are configured to activate the removal means (4) and/or the first and/or second deposition means (5, 18) such that K plastic injection moulded parts (8) continue to be removed from the K cavities and to be simultaneously distributed among the U subgroups (7) in the intermediate storage (17), until each subgroup (7) comprises L plastic injection moulded parts (8), wherein the number L of injection moulded parts (8) corresponds to a subgroup (7) of the number A of plastic injection moulded parts (8) loadable as a maximum into a final packaging unit (6, 20), or an integer divisor of A, or
wherein the control means (9) are configured to activate the removal means (4) and/or the first and/or second deposition means (5, 18) such that distributing the K plastic injection moulded parts (8) among the subgroups (7) is effected by the means for filling, preferably forming the first deposition means (18), exclusively during filling the at least one final packaging unit and in such a way that plastic injection moulded parts (8) continue to be distributed among the subgroups (7), until the at least one final packaging unit is completely filled with A plastic injection moulded parts (8),
**characterised in that**
in addition to the first deposition means (18), second deposition means (5) formed by the removal means (4) or separate therefrom and which can be activated by the control means (9), are provided for depositing K plastic injection moulded parts (8) in an intermediate storage (12) prior to the distribution among the U subgroups (7) in the deposition plane, and **in that** exclusively one shot of K plastic injection moulded parts (8) can be simultaneously received in the intermediate buffer (12), and **in that** the control means (9) are configured to activate a drive of the intermediate buffer (12) such that in particular K plastic injection moulded parts (8) together with the intermediate buffer (12) are shifted, in particular rotationally and/or translatorily, between a loading position (13), in which the intermediate buffer (12) can be preferably loaded exclusively with K plastic injection moulded parts (8), and a removal position (14), in which the K plastic injection moulded parts (8) can be removed, in particular by means of the first deposition means (5), from the intermediate buffer for distribution of the K plastic injection moulded parts (8) among the U subgroups (7), or **in that** the intermediate buffer is fixed in a stationary position and the control means (9) are configured to activate the first deposition means (18) or a hand-over gripper such that the K plastic injection moulded parts (8) are removed with the first deposition means (18) or with a hand-over gripper from the intermediate buffer.

11. The packaging device according to claim 10,
**characterised in that**
the feeding means (22) and/or the discharge means (23) comprise a conveyor belt and/or a rotatable table, with which the final packagings (6, 20) can, when empty, be transported to a filling position, at which they are loaded with the A plastic injection moulded parts (8) and with which the filled end packagings can be discharged from the packaging device (16).

12. An injection moulding plant with an injection moulding device comprising K cavities for the simultaneous manufacturer of K plastic injection moulded parts configured as pipette tips or medical reaction vessels and with a packaging device (16) according to one of claims 10 or 11.

13. The injection moulding plant according to claim 12,
**characterised in that**
an overpack device is arranged downstream of the packaging device (16), with which the final packagings (6, 20) filled by means of the packaging device (16) can be packed singly or in groups into an overpack made in particular, of carton or plastic.

## Revendications

1. Procédé d'emballage pour emballer dans des unités d'emballage final (6, 20) des pièces moulées par injection (8) réalisées sous la forme de pointes de pipette ou de récipients de réaction médicaux, comprenant les étapes suivantes:
- prélèvement simultané de K pièces moulées par injection de K cavités,
- dépose simultanée des K pièces moulées par injection (8), distribuées de manière homogène sur U sous-groupes (7), à l'aide de premiers moyens de dépose (18) comprenant un préhenseur dans un plan de dépose de préférence horizontal,
- prélèvement multiple de K pièces moulées par injection hors des K cavités et distribution simultanée des K pièces moulées par injection sur les U sous-groupes (7) jusqu'à ce que chaque sous-groupe (7) possède L pièces moulées par injection (8), le nombre L de pièces moulées par injection (8) d'un sous-groupe (7) correspondant au nombre A du nombre maximum de pièces moulées par injection (8) pouvant être logées dans une unité d'emballage final (6, 20) ou à un diviseur entier de A,
- remplissage d'au moins une unité d'emballage final avec A pièces moulées par injection (8),
le plan de dépose étant formé par un accumulateur intermédiaire (17) depuis lequel sont chargées simultanément une seule ou plusieurs unités d'emballage final (6, 20), et que l'accumulateur intermédiaire (17) utilisé est un accumulateur intermédiaire (17) pourvu d'une pluralité de positions de dépose disposées les unes à côté des autres dans un plan de dépose, et que des pièces moulées par injection (8) sont prélevées des K cavités et distribuées de manière homogène sur les U sous-groupes (7) dans l'accumulateur intermédiaire (17) jusqu'à ce que chaque sous-groupe (7) possède L pièces moulées par injection, le nombre L de pièces moulées par injection (8) d'un sous-groupe (7) correspondant au nombre A du nombre maximum de pièces moulées par injection (8) pouvant être chargées dans une unité d'emballage final (6, 20) ou à un diviseur entier de A,
ou
la distribution des K pièces moulées par injection (8) sur les sous-groupes (7) s'effectuant exclusivement lors du remplissage de l'au moins une unité d'emballage final dans l'unité d'emballage final et que des pièces moulées par injection (8) sont distribuées sur les sous-groupes (7) jusqu'à ce que l'au moins une unité d'emballage final soit entièrement remplie de A pièces moulées par injection (8),
**caractérisé en ce**
**que** les K pièces moulées par injection, avant la distribution sur les U sous-groupes (7) dans le plan de dépose, sont déposées dans un tampon intermédiaire (12) muni de deuxièmes moyens de dépose (5) séparés des premiers moyens de dépose (18), notamment muni d'un ensemble de tuyaux ou muni d'un préhenseur, et en ce qu'exclusivement une charge de K pièces moulées par injection (8) est accueillie simultanément dans le tampon intermédiaire, et en ce que les K pièces moulées par injection (8), conjointement avec le tampon intermédiaire, sont déplacées, notamment par rotation et/ou par translation, entre une position de chargement (13), dans laquelle le tampon intermédiaire est chargé, de préférence exclusivement, avec K pièces moulées par injection (8) et une position de prélèvement (14), dans laquelle les K pièces moulées par injection (8) sont prélevées en vue de la distribution des K pièces moulées par injection (8) sur les U sous-groupes (7) depuis le tampon intermédiaire, notamment au moyen des premiers moyens de dépose (18), ou en ce que le tampon intermédiaire (12) est disposé en position fixe et les K pièces moulées par injection (8) sont prélevées du tampon intermédiaire (12) avec les premiers moyens de dépose (18) ou un préhenseur de transfert.

2. Procédé d'emballage selon la revendication 1,
**caractérisé en ce**
**qu'**avant un nouveau remplissage avec K pièces moulées par injection (8), K pièces moulées par injection (8) sont prélevées du tampon intermédiaire (12) et distribuées sur les U sous-groupes (7).

3. Procédé selon l'une des revendications 1 ou 2,
**caractérisé en ce que**
les K pièces moulées par injection (8) sont déposées dans l'accumulateur intermédiaire (17) de telle sorte que le nombre U de sous-groupes (7) ne correspond pas ou correspond au nombre V d'unités d'emballage final (6, 20) ou à un multiple entier de V.

4. Procédé selon l'une des revendications précédentes,
**caractérisé en ce que**
l'accumulateur intermédiaire (17) utilisé est une plaque munie d'un nombre de creux ou d'éléments d'emmanchement correspondant aux positions de dépose.

5. Procédé selon l'une des revendications précédentes,
**caractérisé en ce que**
les pièces moulées par injection (8) d'une cavité spécifique ou provenant de cavités spécifiques sont toujours déposées dans un sous-groupe (7) spécifique ou dans des sous-groupes (7) spécifiques.

6. Procédé selon l'une des revendications précédentes,
**caractérisé en ce que**
les V unités d'emballage sont respectivement chargées avec un sous-groupe (7) unique ou respectivement avec plusieurs sous-groupes (7).

7. Procédé d'emballage selon l'une des revendications précédentes,
**caractérisé en ce que**
la ou les unités d'emballage final (6, 20) sont configurées de telle sorte que celles-ci peuvent être utilisées dans un appareil d'analyse, notamment réalisé sous la forme d'un analyseur de sang, et/ou **en ce que** la ou les unités d'emballage final (6, 20) sont emballées individuellement ou en groupes dans un suremballage, notamment un carton enveloppant et/ou un emballage à film, et/ou en ce que la ou les unités d'emballage final (6, 20) possède(nt) une partie porteuse, notamment en métal, de préférence en aluminium ou en matière plastique, comportant exclusivement A emplacements d'accueil pour accueillir les A pièces moulées par injection.

8. Procédé d'emballage selon l'une des revendications précédentes,
**caractérisé en ce que**
chaque sous-groupe (7), à chaque cycle de dépose, est toujours étendu du même nombre de pièces moulées par injection (8), de préférence d'une seule pièce moulée par injection.

9. Procédé d'emballage selon l'une des revendications précédentes,
**caractérisé en ce que**
le nombre A correspond à un multiple entier du nombre de cavités ou ne correspond pas à un multiple entier du nombre de cavités.

10. Dispositif d'emballage pour emballer dans des unités d'emballage final (6, 20) des pièces moulées par injection (8) réalisées sous la forme de pointes de pipette ou de récipients de réaction médicaux, configuré pour mettre en oeuvre un procédé d'emballage selon l'une des revendications précédentes, comprenant:
- des moyens de prélèvement (4) configurés pour le prélèvement simultané de K pièces moulées par injection de K cavités,
- des premiers moyens de dépose (18) comprenant un préhenseur et configurés pour la dépose simultanée des K pièces moulées par injection (8), distribuées de manière homogène sur U sous-groupes (7),
- des moyens d'acheminement (22) destinés à acheminer des unités d'emballage final (6, 20) ainsi que des moyens d'éjection (23) destinée à éjecter les unités d'emballage final remplies hors du dispositif d'emballage (16),
- des moyens destinés à remplir au moins une unité d'emballage final avec A pièces moulées par injection (8),
- des moyens de commande (9) destinés à commander les moyens de prélèvement (4) et/ou les moyens de dépose (18), lesquels sont configurés pour commander ceux-ci de telle sorte que de multiples K pièces moulées par injection peuvent être prélevées hors des K cavités et peuvent être distribuées simultanément sur les U sous-groupes (7) jusqu'à ce que chaque sous-groupe (7) possède L pièces moulées par injection (8), le nombre L de pièces moulées par injection (8) d'un sous-groupe (7) correspondant au nombre A du nombre maximum de pièces moulées par injection (8) pouvant être logées dans une unité d'emballage final (6, 20) ou à un diviseur entier de A,
le plan de dépose étant formé par un accumulateur intermédiaire (17) depuis lequel l'au moins une unité d'emballage final (6, 20) peut être chargée à l'aide des moyens de remplissage, et que l'accumulateur intermédiaire (17) utilisé est un accumulateur intermédiaire (17) pourvu d'une pluralité de positions de dépose disposées les unes à côté des autres dans un plan de dépose, et que les moyens de commande (9) sont configurés pour commander les moyens de prélèvement (4) et/ou les premiers et/ou les deuxièmes moyens de dépose (5, 18) de telle sorte que des K pièces moulées par injection (8) sont prélevées des K cavités et simultanément distribuées sur les U sous-groupes (7) dans l'accumulateur intermédiaire (17) jusqu'à ce que chaque sous-groupe possède L pièces moulées par injection (8), le nombre L de pièces moulées par injection (8) d'un sous-groupe (7) correspondant au nombre A du nombre maximum de pièces moulées par injection (8) pouvant être chargées dans une unité d'emballage final (6, 20) ou à un diviseur entier de A,
ou
les moyens de commande (9) étant configurés pour commander les moyens de prélèvement (4) et/ou les premiers et/ou les deuxièmes moyens de dépose (5, 18) de telle sorte que la distribution des K pièces moulées par injection (8) sur les sous-groupes (7) à l'aide des moyens de remplissage, formant de préférence les premiers moyens de dépose (18), s'effectue exclusivement lors du remplissage de l'au moins une unité d'emballage final dans l'au moins une unité d'emballage final et de telle sorte que des pièces moulées par injection (8) sont distribuées sur les sous-groupes (7) jusqu'à ce que l'au moins une unité d'emballage final soit entièrement remplie de A pièces moulées par injection (8),
**caractérisé en ce**
**qu'**il existe, en plus des premiers moyens de dépose (18), des deuxièmes moyens de dépose (5) formés par les moyens de prélèvement (4) ou séparés de ceux-ci, pouvant être commandés par les moyens de commande (9) et destinés à déposer K pièces moulées par injection, avant la distribution sur les U sous-groupes (7) dans le plan de dépose, dans un tampon intermédiaire (12), et en ce qu'exclusivement une charge de K pièces moulées par injection (8) peut être accueillie simultanément dans le tampon intermédiaire (12), et en ce que les moyens de commande (9) sont configurés pour commander un mécanisme d'entraînement du tampon intermédiaire (12) de telle sorte que notamment exclusivement K pièces moulées par injection (8), conjointement avec le tampon intermédiaire (12), peuvent être déplacées, notamment par rotation et/ou par translation, entre une position de chargement (13), dans laquelle le tampon intermédiaire (12) peut être chargé par les deuxièmes moyens de dépose (5), de préférence exclusivement, avec K pièces moulées par injection (8) et une position de prélèvement (14), dans laquelle les K pièces moulées par injection (8) peuvent être prélevées, notamment à l'aide des premiers moyens de dépose (18), en vue de la distribution des, notamment exclusivement, K pièces moulées par injection (8) sur les U sous-groupes (7) depuis le tampon intermédiaire, ou en ce que le tampon intermédiaire est disposé en position fixe et les moyens de commande (9) sont configurés pour commander les premiers moyens de dépose (18) ou un préhenseur de transfert de telle sorte que les K pièces moulées par injection (8) sont prélevées du tampon intermédiaire avec les premiers moyens de dépose (18) ou un préhenseur de transfert.

11. Dispositif d'emballage selon la revendication 10,
**caractérisé en ce que**
les moyens d'acheminement (22) et/ou les moyens d'éjection (23) comprennent une bande transporteuse et/ou un plateau tournant avec laquelle/lequel les emballages finaux (6, 20) à l'état vide peuvent être transportés à une position de remplissage à laquelle ceux-ci sont chargés avec les A pièces moulées par injection (8) et avec laquelle/lequel les emballages finaux remplis peuvent être éjectés hors du dispositif d'emballage (16) et.

12. Équipement de moulage par injection comprenant un dispositif de moulage par injection qui possède K cavités pour la fabrication simultanée de K pièces moulées par injection réalisées sous la forme de pointes de pipette ou de récipients de réaction médicaux et comprenant un dispositif d'emballage (16) selon l'une des revendications 10 ou 11.

13. Équipement de moulage par injection selon la revendication 12,
**caractérisé en ce que**
le dispositif d'emballage (16) est suivi par un dispositif de suremballage avec lequel les emballages finaux (6, 20) remplis au moyen du dispositif d'emballage (16) peuvent être emballés individuellement ou par groupes dans un suremballage, notamment en carton ou en matière plastique.
